# EUROPÄISCHE PATENTSCHRIFT

(11) **EP 2 438 779 B1**
(45) Veröffentlichungstag und Bekanntmachung des Hinweises auf die Patenterteilung: **09.08.2017**
(21) Anmeldenummer: 10723535.0
(22) Anmeldetag: 02.06.2010
(51) Int. Cl.: H04W 36/26, H04W 36/00, H04W 36/14, H04W 76/04

(54) **VERFAHREN ZUR ÜBERTRAGUNG VON ECHTZEIT-DATENPAKETEN IN KONVERGENTEN NETZEN**
METHOD FOR TRANSMITTING REAL-TIME DATA PACKETS IN CONVERGENT NETWORKS
PROCÉDÉ DE TRANSMISSION DE PAQUETS DE DONNÉES EN TEMPS RÉEL SUR DES RÉSEAUX CONVERGENTS

(30) Priorität: 02.06.2009 DE 102009023485
(43) Veröffentlichungstag der Anmeldung: 11.04.2012
(73) Patentinhaber: Deutsche Telekom AG, 53113 Bonn (DE)
(72) Erfinder: SCHEL, Michael, 36167 Nüsttal (DE)
(74) Vertreter: Cohausz Hannig Borkowski Wißgott
(86) Internationale Anmeldenummer: PCT/EP2010/003340
(87) Internationale Veröffentlichungsnummer: WO 2010/139461

(56) Entgegenhaltungen:
- WO-A1-2007/016964
- WO-A1-2007/069941
- US-A1- 2002 085 516
- US-A1- 2008 212 537

## Beschreibung

Die vorliegende Erfindung betrifft ein Verfahren zur Übertragung von Datenpaketen zwischen einem Endgerät und einem Netzknoten eines konvergenten Kommunikationsnetzes über einen ersten Kanal für einen Nutzerdienst, wobei auf einen zweiten Kanal gewechselt wird, wenn die Übertragungsqualität der Übertragung sinkt, und zur Bewertung der Übertragungsqualität die übertragenen Daten von einer Fehlererkennungseinrichtung auf Fehler geprüft werden und eine Umschalteinrichtung in dem Endgerät und/ oder in dem Netzknoten überprüft, ob die Anzahl an Fehlern zumindest innerhalb eines Überwachungszeitfensters mindestens einen vordefinierten Grenzwert überschreitet. Darüber hinaus betrifft die Erfindung ein System zur Durchführung des Verfahrens.

Ein Verfahren und System der vorgenannten Art sind aus der internationalen Patentanmeldungen WO 2007/069941 A1 und WO 2007/016964 A1 bekannt, wobei diese Schrift einen Handover von einer Sendestation eines Mobilfunknetzes zu einem WLAN Zugangspunkt beschreibt.
In einem konvergenten Netz sind sprach- und datenbasierte Telekommunikationsanwendungen innerhalb eines paketorientierten Netzwerks zusammengefasst. Sie bieten damit eine gemeinsame Infrastruktur für sprach- und datenbasierte Telekommunikationsanwendungen. Häufig wird bei derartigen Netzwerken als Übertragungsprotokoll vorteilhafterweise das Internet Protocol (IP) verwendet. Der Vorteil derartiger Netze liegt in der Aufwertung des IP-Netzes bei verringerten Betriebskosten und gleichzeitiger Möglichkeit, Echtzeitdienste wie Videotelefonie oder Life-Streaming anzubieten. Da die Datenübertragung in IP-Netzen paketbasiert erfolgt, werden über das Netzwerk angebotene Dienste auch Paketträgerdienste genannt. Dazu zählt insbesondere die integrierte Unternehmenskommunikation mit breitbandigen Applikationen wie Webpräsentationen und Videokonferenzen, wobei derartige Applikationen Nutzerdienste darstellen. Bezogen auf das ISO-OSI Schichtenmodell beziehen sich Paketträgerdienste auf die Abläufe in den und zwischen den Schichten 1 bis 3, wohingegen Nutzerdienste auf den Schichten 4 bis 7 angeordnet sind und schließlich die Schnittstelle zwischen dem Benutzer und den Geräten, insbesondere Endgeräten bilden.

Die Implementierung eines konvergenten Netzes bietet die Möglichkeit, derartige Paketträgerdienste von mobilen und fest installierten Kommunikationsendgeräten aus in Anspruch zu nehmen. Nachfolgend sind mobile und fest installierte Kommunikationsendgeräte allgemein als Endgeräte bezeichnet.

Eine Echtzeitübertragung von Daten ist gekennzeichnet durch die Übertragung einer vorbestimmten Menge an Daten, d.h. von Datenbits, in einer vorbestimmten, garantierten Zeitdauer als kontinuierlicher Datenstrom in einer bestimmten Reihenfolge, wobei innerhalb dieses Datenstroms pro Zeitintervall jeweils dieselbe Anzahl von Daten übertragen wird. Für eine Echtzeitübertragung ist des Weiteren noch ein subjektiver Anspruch derart zu berücksichtigen, dass ein Nutzer erwartet, eine in Echtzeit übertragene Datei vergleichsweise schnell und störungsfrei zu erhalten und Wiedergeben zu können. Der Datenstrom ist bei der Echtzeitübertragung daher kontinuierlich, was allgemein auch als Streaming bezeichnet wird. Allerdings ist nicht zwangsweise eine festgelegte Zeiteinteilung je Datenpaket (Zeit-Symmetrie) notwendig. Die Zeiteinteilung kann vielmehr variieren und je nach Anwendungsfall gewählt werden. Ein Streaming Bedarf einer Anmeldung einer Resource und quittiert auch das Ende der Übertragung.

Unter dem Begriff Mobile IP ist ein von der Internet Engineering Task Force (IETF) entworfener Netzwerkprotokoll-Standard bekannt, der den Nutzern mobiler Geräte wie Notebooks den Wechsel von einem funkbasierten Rechnernetz durch ein erstes Übertragungsmedium, beispielsweise WLAN (Wireless Local Area Network), in ein anderes Rechnernetz durch ein zweites Übertragungsmedium bietet und dabei gleichzeitig ermöglicht, eine feste IP-Adresse zu behalten. Der Standard ist in der Empfehlung 3GPP TS 23.234 beschrieben. Mobile IP stellt einen effizienten und skalierenden Mechanismus für die Mobilität von Rechnern im Internet bereit. Das Protokoll gewährleistet, dass mobile Rechner ihren Zugangspunkt zum Internet ändern und trotzdem ihre statische IP-Adresse beibehalten. Dies stellt sicher, dass Verbindungen der Transportschicht bestehen bleiben, während ein Netzwerkwechsel stattfindet. Die verschiedenen Anbieter von Mobile-IP verwenden für den Wechsel auf ein alternatives Übertragungsmedium aktive zyklische Prüfungen und/oder Radiosignalmessungen. Mobile IP basiert darauf, dass eine bidirektionale Kommunikation durchgeführt wird, um andere Übertragungswege zu benutzen. Die bidirektionale Kommunikation bedarf einiger Zeit, die durch Übertragung und Datenverarbeitung in den Knotenpunkten entsteht.

Weiterhin ist unter der Bezeichnung GAN (Generic Access Network), auch UMA (Unlicensed Mobile Access) genannt, ein Telekommunikationsstandard bekannt, der die Sprach- und Datenübertragung sowie das IP Multimedia Subsystem/Session Initiation Protocol (SIP) aus dem Mobilfunk auf IP-Zugangsnetze wie das Internet erweitert. GAN ermöglicht dabei die Konvergenz der mobilen und drahtgebundenen Internettelefonie. Es ermöglicht, dass ein Benutzer nahtlos zwischen WLAN und WAN (Wide Area Network) wechseln kann. Hierfür ist ein GSM/Wi-Fi (Global System for Mobile Communications, Wi-fi ist ein Funkstandard zur Nutzung von WLAN)-fähiges Dual-mode Mobiltelefon notwendig. GAN sieht vor, dass ein Mobilfunkendgerät, sobald es ein WLAN erkennt, über ein Gateway eine sichere IP-Verbindung durch einen Tunnel zu einem Server des Mobilfunknetzwerkbetreibers herstellt, der GAN Controller (GANC) bezeichnet wird. Der Server verhält sich wie eine gewöhnliche Basisstation des zellulären Mobilfunknetzes. Das Mobilfunkendgerät kommuniziert mit dem Server über eine sichere Verbindung unter Verwendung spezieller Protokolle (BSSGP, Base Station System GPRS Protocol). Der Wechsel des Mobilfunkendgerätes von dem Übertragungsmedium GSM zum Übertragungsmedium WLAN erscheint aus Sicht des Mobilfunknetzwerks derart, dass das Mobilfunkendgerät lediglich die Basisstation gewechselt hat, wie dies beim Wechsel einer Mobilfunkzelle in eine andere der Fall ist. Der GAN Standard verwendet IETF RTCP (Internet Engineering Task Force, Real Time Protocol Control Protocol) Informationen als Auslöser zum Übertragungsmediumwechsel. Er spezifiziert keine Mechanismen, mittels derer eine kontrollierte, bedarfsgerechte Umschaltung auf WLAN durchgeführt wird. Vielmehr wird stets dann auf das alternative Übertragungsmedium umgeschaltet, wenn dies verfügbar ist. Da WLAN-Zugangspunkte in zunehmender Menge und Dichte vorhanden sind, hat die Anwendung des GAN- Standards zur Folge, dass sehr häufig auf das zweite Übertragungsmedium gewechselt wird. Im Übrigen wird stets überwacht, ob sich das Mobilfunkendgerät in der Nähe eines WLANs befindet. Dies führt zu einem erhöhten Stromverbrauch sowie aufgrund der häufigen Wechsel zu unnötigem Signalisierungsverkehr im Netzwerk.

Es ist daher Aufgabe der Erfindung, ein einfaches, netzübergreifendes und universelles Verfahren bereitzustellen, welches sich nicht auf Mobilfunk oder digitalen Broadcast beschränkt und in jedem paketorientierten Netz einsetzbar ist, bei dem sogar ohne Verwendung einer bidirektionalen Kommunikation (beispielsweise zur Quittierung der Umschaltung) eine schnelle und sichere Umschaltung der Übertragung der Datenpakete auf einen anderen Kanal ohne für den Nutzer erkennbare Störung wegen Datenverlust lediglich im Bedarfsfall vorgenommen wird. Diese Aufgabe wird durch das Verfahren mit den Merkmalen des Anspruchs 1 sowie mit dem System mit den Merkmalen des Anspruchs 21 gelöst. Vorteilhafte Weiterbildungen der Erfindung sind in den Unteransprüchen beschrieben und werden nachfolgend erläutert.
Es wird ein universelles Verfahren zur Übertragung von Datenpaketen zwischen einem Endgerät und einem Netzknoten eines konvergenten Kommunikationsnetzes über einen ersten Kanal für einen Nutzerdienst vorgeschlagen, bei dem auf einen zweiten Kanal gewechselt wird, wenn die Übertragungsqualität der Übertragung sinkt, wobei die Übertragung in einem kontinuierlichen Datenstrom erfolgt, bei dem stets eine vorbestimmte Anzahl an Datenpaketen pro Zeiteinheit vorliegt, und zur Bewertung der Übertragungsqualität die übertragenen Daten von einer Fehlererkennungseinrichtung auf Fehler geprüft werden und eine Umschalteinrichtung in dem Endgerät und/ oder in dem Netzknoten überprüft, ob die Anzahl an Fehlern zumindest innerhalb eines Überwachungszeitfensters mindestens einen vordefinierten Grenzwert überschreitet, wobei die Umschalteinrichtung(en) unter Beibehaltung der Übertragung der vorbestimmten Anzahl an Datenpaketen pro Zeiteinheit auf den zweiten Kanal wechselt/ wechseln, wenn der mindestens eine Grenzwert überschritten wird.
Die Grundidee der vorliegenden Erfindung besteht darin, die kontinuierliche Übermittlung von Echtzeit-Paketdaten in einem konvergenten Paketdatennetz durch Überwachung des Datenstroms (Stream) auf der Empfängerseite umgehend auf einem parallelen Kanal weiterzuführen, sofern die Echtzeitanforderung nicht mehr mit vereinbarten notwendigen Kriterien übereinstimmt.

Das hier vorgeschlagene Verfahren und System überträgt eine bestimmte oder bestimmbare Menge an Datenbits in einer vorgegebenen Zeit in einem kontinuierlichen Datenstrom, wobei stets eine vorbestimmte Anzahl an Datenpaketen pro Zeiteinheit vorliegt. Dies wird als Echtzeitübertragung verstanden. Es wird gegebenenfalls auf einen anderen Kanal wie nachfolgend beschrieben wird gewechselt. Die Datenbits werden dabei in Paketen nachfolgend auch als Datenpakete bezeichnet, übertragen. Im Gegensatz dazu übertragen andere bekannte Verfahren, wie Mobile IP, nur dann in einer vorgegebenen Zeit eine vorgegebene Menge von Datenpaketen, wenn das System nicht anderweitig beeinflusst ist, beispielsweise durch den Aufbau einer neuen Verbindung. Ist also der Wechsel von einem Übertragungskanal zu einem anderen Übertragungskanal notwendig, was allgemein als Handover bezeichnet wird, verliert die Datenübertragung ihre Echtzeiteigenschaft, d.h. es kann nicht mehr sichergestellt werden, dass die vorbestimmte Anzahl an Datenbits pro Zeiteinheit beim Empfänger ankommt oder fehlerfrei ankommt, so dass der Nutzer eine hörbare und/ oder sichtbare Störung des Nutzerdienstes bemerken kann.

Als Endgerät kann erfindungsgemäß beispielsweise ein Mobiltelefon, ein mobilfunkfähiges Notebook, ein Smartphone, ein digitaler Fernseher, ein Personalcomputer oder dergleichen verwendet werden. Die Übertragung der Daten erfolgt in Paketen, so dass paketbasierte Kommunikationsnetze wie insbesondere das Internet für die Datenübertragung verwendet werden können. Neben Internetprotokoll (IP) Daten können erfindungsgemäß alle denkbaren Daten in Paket- und Rahmenformaten übertragen werden, beispielsweise Ethernet Frames, ATM (Asynchronous Transfer Mode) Zellen oder MPLS (Multiprotocol Label Switching) Pakete. Paketdaten können auch in Mobilfunknetzen und in allen anderen denkbaren paketorientierten Netzen wie beispielweise Ethernet, DSL (Digital Subscriber Line), Digital Video Broadcast Netzen oder WLAN übertragen werden.

Der Netzknoten eines konvergenten Kommunikationsnetzes bildet die Gegenstelle, d.h. die gegenüberliegende Seite zum Endgerät. Dazwischen befindet sich ein Kanal oder befinden sich mehrere Kanäle zur Datenübertragung. In einer beispielhaften Ausführung kann der Netzknoten ein beliebiges Netzelement innerhalb eines Mobilfunknetzes und/oder Festnetzes sein, über das die Datenkommunikation geführt oder bei dem Datenkommunikation endet oder beginnt, beispielsweise ein Router, Server, eine Vermittlungsstelle oder dergleichen. Ein Kanal ist im Sinne der Erfindung eine Übertragungsverbindung zur Übertragung der Datenpakete, die durch das verwendete Übertragungsmedium, die verwendete Übertragungsart, den verwendeten Übertragungsstandard und das verwendete Übertragungsprotokoll definiert ist. Ein Kanalwechsel liegt damit vor, wenn das Übertragungsmedium, die verwendete Übertragungsart, der verwendeten Übertragungsstandard oder das verwendete Übertragungsprotokoll gewechselt wird. Vorzugsweise können der erste Kanal in einem ersten Übertragungsmedium und der zweite Kanal in einem zweiten Übertragungsmedium liegen.

Als Übertragungsmedium wird im Sinne der Erfindung ein Medium zur Übertragung von Daten, beispielsweise Luft, Kupferkabel oder Glasfaser, unter Verwendung einer Übertragungsart wie eine elektrische, optische oder elektromagnetische Übertragung in Verbindung mit einem spezifizierten Übertragungsstandard, beispielsweise 100MBit/s Ethernet, HSUPA (High Speed Uplink Packet Access) als Übertragungsverfahren des Mobilfunkstandards UMTS, oder SDSL (Symmetric Digital Subscriber Line) als Übertragungsverfahren für die leitungsgebundene Datenübertragung in Telefonnetzen, sowie einem Protokoll, beispielsweise ftp (File Transfer Protocol) oder IP (Internet Protokoll) verstanden. Rein beispielhaft kann das erste Übertragungsmedium Luft mit elektromagnetischer Übertragungsart sein, durch die eine Funkübertragung nach einem Mobilfunkstandard wie beispielsweise GPRS (General Packer Radio Service) erfolgt. Als Protokoll kann beispielsweise das Internet Protokoll (IP) verwendet werden. Es kann jedoch auch jedes andere Übertragungsmedium mit einer anderen Übertragungsart, einem anderen Übertragungsstandard und Protokoll Verwendung finden, das die Fähigkeit besitzt, Paketdaten zu übertragen.

Die Kommunikation zwischen dem Endgerät und dem Netzknoten kann direkt erfolgen. Dies bedeutet, dass Endgerät und Netzknoten unmittelbar über einen Kanal miteinander verbunden sind und keine Netzelemente oder gar ganze Netze oder Netzteile zwischen Endgerät und Netzknoten liegen, über die die Daten geführt werden. Über eine direkte Verbindung können die Paketdaten ohne Weiteres in Echtzeit übertragen werden, da die Datenübertragung nicht durch andere Netzelemente gestört oder beeinflusst wird. Dies ist anders, wenn Netzelemente zwischen Endgerät und Netzknoten liegen. Dies können unter anderem zu Fehlern und/ oder Verzögerungen in der Datenübertragung führen. Es ist daher von Vorteil, wenn die Datenübertragung durch einen Tunnel erfolgt, wenn keine direkte Verbindung zwischen dem Endgerät und dem Netzknoten besteht. Der Tunnel schützt die Datenübertragung weitestgehend vor Störungen jeglicher Art, die durch das Routing über Netzelemente entstehen können.

Eine Übertragung mittels GPRS, UMTS (Universal Mobile Telecommunications System), HSPA (High Speed Packet Access) und LTE (Long Time Evolution) basiert auf einem GTP Tunnel (GTP, GPRS Tunnel Protokoll), der zwischen Endgerät und Netzknoten aufgebaut wird, wobei die Übertragung insbesondere über Basisstation, GGSN (GPRS Support Node), und SGSN (Serving GPRS Node) erfolgt. Der Tunnel kann beispielweise so konfiguriert werden, dass er IP (Internet-Protokoll) -Daten unbestätigt und ohne wiederholtes Senden bei fehlerhaftem Datenpaket und mit einer geringeren Bitfehlerwahrscheinlichkeit (BER) von 10exp-3 bidirektional überträgt. Außerdem besteht die Möglichkeit, in Reihe geordnete Pakete in der gleichen Reihenfolge beim Empfänger zu ordnen, welches für die Übertragung von Datenpaketen in Echtzeit allerdings ohne Bedeutung ist.

Für die Realisierung des Tunnels außerhalb von GTP in dem erfindungsgemäßen Verfahren eignet sich insbesondere der sogenannte ESP-Tunnel (Encapsulating Security Payload) nach dem sogenannten IPSec (Internet Protocol Security) Standard, spezifiziert in dem Memo IETF RFC 4303. Sofern die Paketdaten von einem Ende zum anderen Ende getunnelt werden, erscheinen dazwischenliegende Netzknoten, wie z.B. Router, für das Protokoll transparent. Sofern ausschließlich Tunnel verwendet werden, wird erfindungsgemäß nur eine IP Adresse je Endgerät und Netzknoten benötigt, da alle Übertragungswege gleiche Endpunkte haben.

Neben den beiden beschriebenen Tunneln (GTP, ESP) können neben anderen Tunnelarten Netzknoten und Endgerät direkt miteinander verbunden sein, so dass kein Tunnel zur Übertragung von Datenpaketen erforderlich ist. Ein Kanal kann erfindungsgemäß einen oder mehrere Tunnel tragen oder auch direkt Datenpakete übertragen.

Erfindungsgemäß kann Fehlererkennungseinrichtung die übertragenen Daten kontinuierlich auf Fehler prüfen und der ihr zugeordneten Umschalteinrichtung das Auftreten dieser Fehler mitteilen. Dabei können verschiedene Fehlerarten wie Bitfehler, Paketfehler, Jitterfehler und/ oder Fehler in der Paketsequenz geprüft und gesondert der Umschalteinrichtung mitgeteilt werden.

Als Paketsequenz kann eine Prüfsumme verwendet werden, mittels derer die korrekte Übertragung der Paketdaten prüfbar ist, beispielsweise im Rahmen einer zyklischen Redundanzprüfung (CRC, Cyclic Redundancy Check). Sind Bitfehler in der Prüfsumme vorhanden, stellt der Empfänger fest, dass das Paket falsch übertragen wurde. Das den Wechsel des Übertragungsmediums auslösende Ereignis ist in diesem Fall ein Prüfsummenfehler.

Vorzugsweise werden alle vorgenannten Fehlerarten zur Beurteilung der Echtzeitfähigkeit des Kanals verwendet. Die Umschalteinrichtung prüft daraufhin, ob die Fehlerrate, d.h. die Anzahl der Fehler pro Überwachungszeitfenster überschritten wird. Hierfür wird von der Umschalteinrichtung in jedem Überwachungszeitfenster die Anzahl der Fehler gezählt. Dabei kann die Gesamtfehleranzahl aller Fehlerarten pro Überwachungszeitfenster bestimmt und mit einem vorgegebenen Grenzwert verglichen werden.

Alternativ können jedoch für verschiedene Fehlertypen unterschiedliche Überwachungszeitfenster, d.h. Überwachungsfenster unterschiedlicher Länge verwendet werden. Dies ist insbesondere deshalb von Vorteil, weil auch die Übertragung von Bits über einen Kanal einerseits und die Übertragung von Paketen über den Kanal andererseits zeitlich unterschiedlich lange dauert und wiederum die Variation der Paketlaufzeit (Jitter) je nach Nutzerdienst im Wesentlichen zwischen ± 5 ms und ± 1000 ms variieren kann und daher für eine ebenfalls ein Überwachungsfenster einer Länge benötigt wird, die anders ist als die Länge eines Überwachungsfensters zur Feststellung von Bitfehlern oder Paketfehlern. Es kann daher vorgesehen werden, dass die Umschalteinrichtung zeitgleich überprüft, ob die Bitfehler in einem ersten Überwachungszeitfenster, die Paketfehler in einem zweiten Überwachungszeitfenster und die Jitterfehler in einem dritten Überwachungszeitfenster, jeweils eine Anzahl erreichen, die einen jeweils vorgegebenen Grenzwert überschreitet, wobei das erste, das zweite und das dritte Überwachungszeitfenster unterschiedliche zeitliche Längen besitzen. Gemäß dieser Ausführungsvariante wird daher für jeden Fehlertyp ein eigener Grenzwert vorgegeben, der innerhalb der Überwachungszeitfenster nicht überschritten werden darf. Anderenfalls wird ein Kanalwechsel ausgelöst.

In einer vorteilhaften Weiterbildung der Erfindung wird innerhalb von zwei vorzugsweise innerhalb von drei oder mehr Überwachungszeitfenstern unterschiedlicher zeitlicher Länge gleichzeitig daraufhin geprüft, ob die Anzahl der Fehler vorgegebene Grenzwerte überschreiten. Dies kann für den Fall erfolgen, dass eine Gesamtfehleranzahl aller Fehlertypen auf Überschreiten eines vorgegebenen Grenzwerts geprüft wird. Alternativ oder kumulativ kann dies für den Fall erfolgen, dass jeder Fehlertyp gesondert geprüft wird. Für diesen Fall bedeutet das, dass für jeden Fehlertyp jeweils zwei, drei oder mehr Überwachungszeitfenster verwendet werden. Vorzugsweise wird für jeden Fehlertyp ein vergleichsweise kurzes, ein mittleres und ein langes Überwachungszeitfenster verwendet, so dass bei drei Fehlertypen insgesamt neun Überwachungszeitfenster gleichzeitig daraufhin überwacht werden, ob in ihnen eine Anzahl an Fehlern auftritt, die einen jeweils vorbestimmten Grenzwert überschreitet. Dies ermöglicht die Erstellung eines umfassenden Fehlerbildes, das eine zuverlässige Bewertung der Übertragungsqualität zulässt. Der Wechsel auf den zweiten Kanal erfolgt nur dann, wenn zwei oder mehr Grenzwerte in den Überwachungszeitfenstern gleichzeitig überschritten werden. So kann es beispielsweise unproblematisch sein, wenn in mehreren vergleichsweise kurzen Zeitfenstern jeweils nur ein oder zwei Fehler vorkommen, da diese durch bekannte Fehlerkorrektureinrichtungen korrigiert werden können. Ist jedoch die Summe dieser in dem kleinen Zeitfenster unkritischen Fehler höher als ein Grenzwert in einem längeren, beispielsweise in einem Minutenfenster, deutet dies auf eine verschlechterte oder sich verschlechternde Übertragungsqualität hin und der Kanal sollte gewechselt werden, um einer für den Nutzer bemerkbaren Beeinträchtigung des Nutzerdienstes vorzubeugen.

Die Länge des oder der Überwachungszeitfenster(s) kann in einem dem Nutzerdienst zugeordneten Datensatz hinterlegt oder aus diesem Datensatz berechenbar sein, den die Umschalteinrichtung des Endgeräts und/ oder des Netzknotens vor Beginn der Datenübertragung lädt und zur Bestimmung der Länge des oder der Überwachungszeitfenster(s) verwendet.

In einer vorteilhaften Weiterbildung der Erfindung kann die Länge des oder der Überwachungszeitfenster in Abhängigkeit der zu übertragenden Datenmenge gewählt werden. Dies ist von Bedeutung, da die zu übertragende Datenmenge die Übertragungszeit der Gesamtübertragung bestimmt und zumindest ein längeres Überwachungszeitfenster nicht länger als die Gesamtübertragung dauern sollte. Hierzu können in dem Datensatz Werte in Gestalt einer Liste enthalten sein, welche Zeitfensterlänge oder Zeitfensterlängen bei den einzelnen Fehlertypen im Falle einer bestimmten Datenmenge bevorzugt werden sollen.

Besonders bevorzugt ist die Länge des Überwachungszeitfensters oder eines der mehreren Überwachungszeitfenster in seiner Länge derart gewählt, dass maximal ein Fehler, oder bezogen auf die einzelnen Fehlertypen maximal ein Bitfehler, ein Paketfehler, ein Jitterfehler oder ein Sequenzfehler innerhalb des Fensters auftreten darf. Dies stellt einerseits die kürzeste technisch sinnvolle Länge eines Überwachungszeitfensters dar, um einen Fehler zu erkennen, da keine halben Bit- oder Paketfehler erkannt werden, und gewährleistet andererseits eine effektive Qualitätskontrolle der Übertragungsqualität, da bei zu langen Intervallen entsprechend vermehrt Fehler auftreten können, deren zu hohe Anzahl in dem Zeitfenster erst dann bemerkt wird, wenn die Echtzeitübertragung bereits für den Nutzer merklich beeinträchtigt ist.

Die vordefinierte Länge eines Zeitintervalls ist weiterhin vorzugsweise in Abhängigkeit von dem zur Datenübertragung verwendeten Kanal zu wählen. Dabei kann die Länge umso größer definiert werden, je geringer die einzuhaltende und zugesicherte Datenübertragungsrate ist. Beispielsweise kann bei Verbindungen mit einer Datenübertragungsrate unter 100MBit/s eine Länge von mindestens 100 Millisekunden aufweisen. Abhängig von den Parametern des Kanals können diese Werte jedoch signifikant abweichen. Bei einer beispielhaften Übertragung über eine Glasfaser als erster Kanal mit einer Bandbreite von 10GBit/s und einer weiteren Glasfaser mit einer Bandbreite von 10GBit/s als zweiter Kanal können erfindungsgemäß Zeitintervalle von einigen oder mehreren Mikrosekunden oder kleiner als Kriterium zum Wechsel verwendet werden. Dieses Kriterium stellt sicher, dass kein Wechsel des Übertragungsmediums vorgenommen wird, wenn lediglich geringe, kurzzeitige und in der Nutzungsqualität unbemerkbare Einbußen in der Übertragungsqualität vorliegen, so dass die Netzbelastung durch zusätzliche Signalisierung nicht unnötig erhöht und bei dem Endgerät die Energieressourcen nicht unnötig belastet werden.

In einer vorteilhaften Weiterbildung der Erfindung kann auch der oder können die Grenzwerte in einem dem Nutzerdienst zugeordneten Datensatz hinterlegt oder aus diesem Datensatz berechenbar sein, den die Umschalteinrichtung des Endgeräts und/ oder des Netzknotens vor Beginn der Datenübertragung lädt und zur Bestimmung des oder der Grenzwerte verwendet. Weiterhin kann ein Gesamtdatensatz verwendet werden, in dem die Überwachungsintervalllängen und die Grenzwerte zusammen hinterlegt sind. Erfindungsgemäß ist des Weiteren vorgesehen, dass die Grenzwerte strenger gewählt sind als es die Anforderungen für den Nutzerdienst fordern. Dies stellt sicher, dass eine Beeinträchtigung des Nutzerdienstes mit sehr hoher Sicherheit vermieden wird.

In einer weiteren vorteilhaften Weiterentwicklung des erfindungsgemäßen Verfahrens ermittelt nur die Umschalteinrichtung des Netzknotens die Länge des oder der Überwachungszeitfenster und des oder der Grenzwerte und teilt sie dann dem Endgerät mit. Dies hat den Vorteil, dass die Energie-, Speicher- und im Falle einer Berechnungsnotwendigkeit von Grenzwerten oder Überwachungsfensterlängen auch die Rechenleistungsressourcen des Endgeräts nicht beeinträchtigt werden.

Sofern erfindungsgemäß festgestellt wird, dass eine vorgegebenen maximale Fehleranzahl in einem oder mehreren Überwachungszeitfenstern nicht eingehalten worden ist oder eingehalten wird, kann ein Auslösesignal (Trigger, Signalisierung) ausgegeben werden, mittels welchem der Wechsel des Kanals initiiert wird. Das Auslösesignal bewirkt folglich, dass die Verbindung über den ersten Kanal abgebaut und über einen zweiten Kanal aufgebaut und die Datenübertragung dort fortgesetzt wird. Die Umschalteinrichtung des Endgeräts und/ oder des Netzknotens sendet ein Auslösesignal an die Umschalteinrichtung der jeweils anderen Seite, wenn mindestens ein, vorzugsweise mehrere Grenzwert überschritten werden, woraufhin die Umschalteinrichtung der anderen Seite auf den zweiten Kanal wechselt.

Das Auslösesignal kann über einen Signalisierungskanal gesendet werden. Ein solcher Signalisierungskanal ist üblicherweise zwischen Endgerät und Netzkoten vorhanden und muss nicht gesondert aufgebaut werden. Der Signalisierungskanal besitzt eine geringere Datenübertragungsrate als der erste Kanal. Dadurch können Ressourcen des Netzknotens bzw. Netzes eingespart sowie der Stromverbrauch des Endgerätes reduziert werden. Der Signalisierungskanal verbindet die Umschalteinrichtungen von Netzknoten und Endgerät miteinander. Alternativ kann vorgesehen sein, dass in dem Fall, dass das Endgerät und der Netzknoten über mehrere Kanäle miteinander verbunden sind, das Auslösesignal über mehr als einen dieser Kanäle, insbesondere über alle Kanäle gesendet wird. Dies stellt sicher, dass das Auslösesignal auf der anderen Seite ankommt.

Als Auslösesignal kann eine SMS verwendet werden. Diese kann in zumindest einem Datenpaket an den Netzknoten gesendet werden, wobei der Netzknoten daraufhin den Kanal wechselt. Das Datenpaket kann dabei eine Information enthalten, zu welchem Kanal gewechselt werden soll. Eine bidirektionale Kommunikation zur Initiierung eines Kanalwechsels ist in diesem Fall nicht notwendig.

Für den Wechsel zu dem zweiten Kanal können drei bevorzugte Ausführungsvarianten verwendet werden. Gemäß einer ersten Variante kann der zweite Kanal im Wesentlichen gleichzeitig mit dem ersten Kanal zwischen dem Endgerät und dem Netzknoten aufgebaut werden. Der zweite Kanal ist damit vor einem Auslösesignal bereits aufgebaut und kann sogleich im Falle eines Auslösesignals verwendet werden, um die Datenübertragung zu übernehmen. Der zweite Kanal wird in dieser Variante folglich parallel zu ersten Kanal aufrechterhalten. Dadurch kann der Wechsel auf den zweiten Kanal verzögerungsfrei und ohne Verlust von Datenpaketen, d.h. in Echtzeit durchgeführt werden.

Gemäß einer zweiten Variante kann der Signalisierungskanal zumindest temporär wenigstens auf die Datenübertragungsrate des ersten Kanals ausgebaut und als zweiter Kanal verwendet werden. Beispielsweise kann bei ISDN in Deutschland der Signalisierungskanal für kleine Datenübertragungen mit einer Datenübertragungsrate bis 9600Bit/s genutzt werden. Dies ist auch bei GPRS möglich. Der Signalisierungskanal kann auf diese Weise zu dem zweiten Kanal werden, der die Übertragung der Paketdaten in Echtzeit für die Dauer der Gesamtübertragung übernimmt.

Gemäß einer dritten, die zweite Variante weiterbildenden Variante kann ein weiterer Kanal zwischen dem Endgerät und dem Netzknoten aufgebaut werden und die Datenübertragung anschließend von dem Signalisierungskanal zu dem weiteren Kanal gewechselt werden. Hierdurch wird der Signalisierungskanal wieder "entlastet", d.h. nur temporär benutzt. Der Signalisierungskanal stellt die Datenbandbreite des ersten Kanals zur Verfügung, bis der zweite Kanal als Ersatz zur Verfügung steht. Auf diese Weise kann der Signalisierungskanal als Brücke zwischen dem ersten und dem zweiten Kanal verwendet werden, da die Datenübertragung in Echtzeit kurzeitig, d.h. für wenige Millisekunden bis Sekunden, in dem Signalisierungskanal erfolgt. Vorzugsweise wird die Datenübertragung innerhalb von wenigen Millisekunden oder wenigen Mikrosekunden von dem Signalisierungskanal in den weiteren Kanal gelegt.

Das Endgerät und der Netzknoten können über zwei oder mehr Kanäle miteinander verbunden sein, wobei die Datenübertragungsrate jedes Kanals von der Umschalteinrichtung des Endgeräts und/ oder des Netzknotens überwacht wird. Erfindungsgemäß kann als zweiter Kanal derjenige Kanal verwendet werden, der aktuell die höchste Datenübertragungsrate aufweist.

Der Wechsel auf den zweiten Kanal kann vorzugsweise dann erfolgen, wenn die aktuelle Datenübertragungsrate des zweiten Kanals größer als die Datenübertragungsrate des ersten Kanals ist, und der zweite Kanal nicht innerhalb eines letzten Zeitraums von wenigen Sekunden verwendet worden ist. Dies stellt sicher, dass nicht auf einen Kanal gewechselt wird, der unmittelbar zuvor bereits genutzt, infolge schlechter Übertragungsqualität jedoch gewechselt wurde. Damit wird verhindert, dass zwischen zwei Kanälen kurz hintereinander hin und her gesprungen wird.

Erfindungsgemäß sind Kanalaufbau- und -überwachungseinheiten in dem Endgerät und in dem Netzknoten vorhanden, die der jeweiligen Umschalteinrichtung des Endgeräts bzw. des Netzknotens die Art und /oder den Übertragungsstandard der verfügbaren Kanäle insbesondere samt ihren jeweils aktuell verfügbaren Datenübertragungsraten mitteilen.

Besonders vorteilhaft ist des Weiteren, wenn die Datenpakete Kopfdaten enthalten, die komprimiert übertragen werden. Die sogenannte robuste Datenkopfkomprimierung, spezifiziert in dem Memo IETF RFC 3095, bietet die Vorteile, dass die Wahrscheinlichkeit von fehlerhaften Datenpaketen geringer ist, da weniger Datenbits innerhalb eines Datenpakets übertragen werden. Da dadurch auch weniger Daten je Kanalnutzer übertragen werden, können mehr Nutzer den Kanal verwenden. Die robuste Datenkopfkomprimierung funktioniert jedoch nur, wenn die beiden Nachrichtenenden direkt, ohne weiteren Verkehrsknoten dazwischen kommunizieren können. Dies wird durch die Verwendung eines Tunnels bei der Datenübermittlung oder durch eine direkte Verbindung sichergestellt.

Erfindungsgemäß wird des Weiteren ein System zur Durchführung des Verfahrens vorgeschlagen, umfassend ein Endgerät, einen Netzknoten eines konvergenten Kommunikationsnetzes sowie einen ersten Kanal, über den das Endgerät mit dem Netzknoten zur Übertragung von Datenpaketen in einem kontinuierlichen Datenstrom, bei dem stets eine vorbestimmte Anzahl an Datenpaketen pro Zeiteinheit vorliegt, verbunden ist, weiterhin umfassend zumindest einen zweiten Kanal, zu dem die Datenübertragung gewechselt werden kann, wenn die Übertragungsqualität sinkt, wobei eine Fehlererkennungseinrichtung zur Prüfung der Datenübertragung auf Fehler, und eine Umschalteinrichtung in dem Endgerät und in dem Netzknoten zur Überprüfung vorhanden ist, ob die Anzahl an Fehlern zumindest innerhalb eines Überwachungszeitfensters mindestens einen vordefinierten Grenzwert überschreitet, wobei ferner die Umschalteinrichtung(en) dazu eingerichtet ist/sind, unter Beibehaltung der Übertragung der vorbestimmten Anzahl an Datenpaketen pro Zeiteinheit auf den zweiten Kanal zu wechseln, wenn der mindestens eine Grenzwert überschritten ist.

Die Fehlererkennungseinrichtung kann eine Datenkopfkomprimierungseinrichtung sein, die zwischen einer Umschalteinrichtung und einer Datenschnittstelle angeordnet ist.

Jedem der Kanäle ist in dem Endgerät und dem Netzknoten eine Kanalaufbau- und - überwachungseinheit zugeordnet, wobei den Kanalaufbau- und - überwachungseinheiten derselben Seite in Datenübertragungsrichtung zu dem Kanal die entsprechende Umschalteinrichtung vorgeschaltet sein kann.

Ferner können die Umschalteinrichtungen von Endgerät und Netzknoten über einen Signalisierungskanal miteinander verbunden oder verbindbar sein.

Die Erfindung wird nachfolgend anhand eines bevorzugten Ausführungsbeispiels und der beigefügten Figur näher erläutert.

Die Figur zeigt eine Blockdarstellung eines Endgerätes 1 als logische Einheit sowie eines Netzknotens 2 ebenfalls als logische Einheit, die über einen ersten Kanal 3, sowie über weitere, optionale Kanäle 4, 5 verbunden sind. Die Kanäle 3, 4, 5 repräsentieren jeweils eine Datenverbindung, die direkt zwischen dem Endgerät 1 und dem Netzknoten 2 ausgebildet sein kann, d.h., dass zwischen Netzknoten und Endgerät kein weiteres Netzelement liegt, über das die Datenübertragung erfolgt. Alternativ können die Kanäle 3, 4, 5 jeweils ein Netzwerk repräsentieren, durch das die Datenübertragung geroutet ist. In diesem Fall ist in den Kanälen jeweils ein IPSec (ESP, Encapsulated Security Payload), GTP oder anderer Tunnel für die Datenübertragung ausgebildet. In einer weiteren Alternative kann einer oder können zwei der Kanäle 3, 4, 5 eine direkte Verbindung repräsentieren, wohingegen in dem oder den anderen Kanälen 3, 4, 5 ein Tunnel ausgebildet ist. Zur Einrichtung der entsprechenden Tunnel oder direkten Verbindung sind jeweils Kanalaufbau- und überwachungseinheiten 6 in dem Endgerät 1 und dem Netzknoten 2 vorhanden.

Eine erfindungsgemäße Umschalteinrichtung 9 in dem Endgerät 1 und dem Netzknoten 2 zum Wechsel des Kanals, ist mit den entsprechenden Kanalaufbau- und überwachungseinheiten 6 des Endgerätes 1 bzw. des Netzknotens 2 verbunden. Die Umschalteinrichtungen 9 entscheiden, über welchen Kanal 3, 4, 5 die Datenübertragung erfolgen soll und leiten die zu übertragenden Paketdaten einem der Kanäle 3, 4, 5 zu. Weiterhin sind die Umschalteinrichtungen 9 von Endgerät 1 und Netzknoten 2 durch einen Signalisierungskanal 7 miteinander verbunden, über den ein Auslösesignal gesendet werden kann. Eine Datenkopfkomprimierungseinrichtung 8 zur Fehlererkennung und Komprimierung der Kopfdaten der zu übertragenden Paketdaten im Endgerät 1 und dem Netzknoten 2 ist ebenfalls mit der entsprechenden Umschalteinrichtung 9 verbunden. Die Datenkopfkomprimierung kann vorteilhafterweise nach dem Memo IETF RFC 3095 erfolgen.

Zwischen dem ersten Kanal 3 und den Datenkopfkomprimierungseinrichtungen 8 in dem Endgerät 1 und dem Netzknoten 2 werden die Umschalteinrichtungen 9 wirksam. Da die Umschalteinrichtung 9 im Netzknoten 2 und im Endgerät 1 Verbindungen zu sämtlichen Kanälen 3, 4, 5 und vorzugsweise auch zu dem Signalisierungskanal 7 hat, die robuste Datenkopfkomprimierung 8 dagegen nur einen Kanal bedienen kann, sind alle Komponenten, d.h. die Kanalaufbau- und überwachungseinheiten 6, die Umschalteinrichtung 9 und die Datenkopfkomprimierungseinrichtung 8 auf der logischen Ebene in einer Systemeinheit untergebracht, d.h. sowohl in der Systemeinheit Endgerät 1 und in der Systemeinheit Netzknoten 2.

Da alle Datenpakete von Nutzerdiensten über die erfindungsgemäße Umschalteinrichtung 9 im Endgerät 1 und im Netzknoten 2 laufen, kann jedem Datenstrom eine eindeutige Quellenadresse, beispielweise eine "Source IP Address" zugeordnet werden, wodurch zusätzliche Funktionen des Mobile IP, wie bei anderen Verfahren üblich, nicht mehr benötigt werden. Aufbau und Abbau zum sogenannten "Home Agent" des Mobile IP entfällt, da das erfindungsgemäße System und/oder Verfahren, sofern ein Kanal zur Verfügung steht, eine Verbindung zum Netzknoten hat. Ein Home Agent im Sinne von Mobile IP ist eine Einheit, die dem Endgerät eine IP Adresse in einer getunnelten Verbindung zuordnet, sogar wenn das Endgerät mit einem Netzknoten eines besuchten Netzwerks, d.h. einer Basisstation eines Fremdnetzes, verbunden ist.

Der erfindungsgemäße Auslöser (Trigger) für den Übertragungsmediumwechsel erfolgt aufgrund direkter Erfassung, insbesondere Messung zumindest einer technischen Größe, die nicht auf den Protokollinformation der IETF RTCP Funktionen beruht. Daten die vom ersten Kanal 3 zu einer Datenkopfkomprimierungseinrichtung 8 übermittelt werden, werden dort geprüft und mit den Grenzwerten für die Fehlertypen pro Überwachungszeitfenster verglichen. Folgende Parameter werden dazu jeweils separat für jeden vorhandenen Kanal verwendet:
- Der Nutzerdienst teilt der Umschalteinrichtung 9 der gegenüberliegenden logischen Einheit 1, 2 folgende Daten bei Echtzeitübertragungswunsch implizit durch die Übertragung selbst oder/und explizit in einer separaten Übertragung (Signalisierungspaket) jeweils als vorgegebene Grenzwerte mit:
   ∘ Anzahl der in Echtzeit zu übertragenden Datenpakete in mindestens drei verschiedenen Überwachungszeitfenstern mit jeweils erlaubter Fehleranzahl pro Überwachungszeitfenstern (Datenmenge/Variation/Zeit eines Streams mit Anfang und Ende)
   ∘ Erlaubte Anzahl von fehlenden bzw. falsch übermittelten Datenpaketen und Bitfehlern für den jeweiligen Nutzerdienst (Datenfehler pro Zeit)
   ∘ Art des Nutzerdienstes: Conversational, Broadcast, Offline Streaming, (Generelles Qualitätskriterium, Notwendigkeit der eindeutigen Sequenzierung, Größe der Datenpakete (Bits pro Paket))
   ∘ Erlaubter Jitter zum Eintreffen der Pakete (Variation der Paketlaufzeit) gemessen in mindestens drei verschiedenen Zeitintervallen;
- Optional teilt der Nutzerdienst auch mit, ob die Datenpakete dieselbe Größe (Anzahl der Bits) haben oder ob diese entsprechend umpaketiert werden müssen. Sofern der Nutzerdienst nicht diese und vorher genannten Größen liefern kann, werden Grenzwerte und Überwachungsfensterlängen aus einem Datensatz verwendet, die dort hinterlegt sind.
- Die Datenkopfkomprimierungseinrichtung 8 teilt kontinuierlich der Umschalteinrichtung 9 innerhalb der logischen Einheit 1, 2 folgende Daten mit:
   ∘ die Sequenznummer der Pakete, die eintreffen sollen, aus welchen sich ergibt, dass bzw. ob Pakete fehlen
   ∘ Bitfehler und/oder Paketfehler der letzten Datenpakete
   ∘ Jitterfehler (Laufzeitvariation) der letzten Datenpakete
- Die Kanalaufbau- und überwachungseinheiten 6 und vorteilhafterweise auch Kanal 7 teilen vor der Übertragung und idealerweise auch während der Übertragung eines jeweiligen Datenstroms der Umschalteinrichtung 9 einer Einheit 1, 2 folgende Daten mit:
   ∘ die Art der verfügbaren Kanäle mit der Information über Zugangstechnik, vorzugsweise einschließlich typischer Parameterwerte der Zugangstechnik wie Fehlerrate, Laufzeitvariation, Möglichkeit der eindeutigen Sequenzierung und
   ∘ die zur Verfügung stehende Bandbreite, vorzugsweise für einen jeweiligen Nutzerdienst, vorzugsweise unter Angabe der erlaubten Belegungszeit

Die Umschalteinrichtung 9 erzeugt einen Trigger (Auslöser) zum Umschalten zum anderen Kanal 4, 5, aufgrund bekannter vorher genannter Informationen, wenn
- Der Nutzerdienst in das andere Übertragungsmedium 4, 5 gelegt werden kann aufgrund der Information des Kanals 4, 5, sowie der Kanal 4, 5 nicht in den letzten Sekunden benutzt wurde, sowie,
   ∘ ein kostengünstigerer oder weniger von Verkehr anderer Endgeräte ausgelasteter Kanal wie bspw. WLAN oder Ethernet zur Verfügung steht, oder
   ∘ die Anzahl der Pakete pro Sekunde, für mindestens 3 verschiedene Zeitintervalle vorbestimmter Länge, insbesondere größer als 100ms, geringer als die in der Toleranz erlaubte Anzahl ist, oder
   ∘ der Jitter (Laufzeitvariation), für mindestens 3 verschiedene Zeitintervalle vorbestimmter Länge, insbesondere größer als 100ms, über dem vorgegebenen Toleranzwert liegt, oder
   ∘ die Sequenznummer außerhalb der Toleranz liegt, d.h., dass die Datenpakete nicht mehr in der richtigen Reihenfolgen ankommen, oder der Stream nicht mehr kontinuierlich ist, oder
   ∘ die Bitfehlerrate für mindestens drei verschiedene Zeitintervalle schlechter als der vorgegebene Toleranzwert von mehreren Paketen ist.

Die von den Fehlerraten einzuhaltenden Grenzwerte in den Überwachungszeitfenstern, Nichteinhaltung eine Umschaltung auslöst, müssen strenger als die Vorgaben des Nutzerdienstes sein, da ansonsten die Umschaltung erst dann passiert, wenn das Echtzeitkriterium nicht mehr eingehalten werden kann und der Benutzer des Nutzerdienstes eine Verschlechterung des Nutzerdienstes bereits wahrnehmen kann. Die einzuhaltenden Vorgaben des Nutzerdienstes, auch Nutzerdienstparameter genannt, sind allgemein als Quality of Service Parameter bekannt.

Sofern ein Trigger erzeugt wurde, sendet die Umschalteinrichtung 9 auf der Empfängerseite, welche der Netzknoten 2 oder Endgerät 1 sein kann, mindestens ein Nachrichtenpaket über alle verfügbaren Kanäle 3, 4, 5, 7 an den Sender, welche entsprechend das Endgerät 1 oder der Netzknoten 2 ist, der sofort ein anderes Medium 4, 5 für die Übertragung verwendet. Die Umschalteinrichtung 9 leitet die Daten, kommend vom neuen Kanal 4, 5, an die Datenkopfkomprimierungseinrichtung 8 des Empfängers weiter.

Um zu verhindern, dass permanent alle Übertragungswege für einen eventuellen Übergang reserviert werden, insbesondere um Energie und Übertragungskapazität zu sparen, können folgende vorteilhafte Funktionen und/oder Verfahren in Abhängigkeit der Applikation, d.h. des die Paketdatenübertragung benötigenden Nutzerdienstes verwendet werden:

### Conversational Daten:

d.h. Streaming von Sprach- und/ oder Bilddaten, beispielsweise bei einer bidirektionalen Videotelefonie-Verbindung:
Ein erster Kanal 3 wird von der Umschalteinrichtung 9 des Endgerätes 1 genutzt. Ein weiterer paralleler Kanal 4, 5 wird von der Umschalteinrichtung 9 des Endgerätes 1 permanent aufrecht gehalten werden.

Von Qualitätsverlust kann man nur dann sprechen, wenn Fehler in der Übertragung auf der Nutzerdienstebene auftreten. Pakete, die gesendet wurden und fehlerhaft angekommen sind, können zum Teil von der FEC korrigiert werden. Der kritische Grenzbereich, wo Fehler nur noch mit geringer Wahrscheinlichkeit korrigiert werden können, sollte auf jeden Fall genutzt werden um einen Umschaltvorgang (Trigger) auszulösen.

Während der Umschaltphase werden Pakete sicherheitshalber auf mehreren Kanälen übertragen, da Netzknoten 2 und Endgerät 1 zeitlich nicht synchronisiert sind.

In einer vorteilhaften Weiterentwicklung der Erfindung können in dem Fall, dass viele Fehler auftreten, d.h. fehlerhafte Pakete vorliegen, und eine eindeutige Sequenz der Pakete nicht notwendig ist, die fehlerhaften Pakete noch einmal gesendet werden. Weiterhin kann dann eine Sequenzierungseinrichtung mit einem Zwischenspeicher (Cache) auf der Empfängerseite, d.h. in dem Endgerät 1 oder in dem Netzknoten 2 vorgesehen, in dem die erneut gesendeten Pakete zwischengespeichert werden, wobei die Sequenzierungseinrichtung die Datenpakete aus dem Zwischenspeicher neu ordnet.

### Broadcast

Ein erster Kanal 3 wird von der Umschalteinrichtung 9 des Netzknotens 2 genutzt, wobei ein weiterer direkter Signalisierungskanal 7 mit geringerer Datenbandbreite für die Signalisierung und für geringe Datenvolumen verwendet wird, der innerhalb von wenigen Sekunden durch einen notwendigen breitbandigeren Kanal 4, 5 ersetzt wird, worin die Nutzerdaten, d.h. die Pakete nach einem weiteren Wechsel übertragen werden. Hier besteht der Vorteil, dass auf der einen Seite, d.h. bei dem Netzknoten 2 die Funkressource sparsam verwendet wird, auf der anderen Seite, d.h. beim Endgerät 1, der Stromverbrauch verringert werden kann. Der Übergang kann dennoch schnell verlaufen, da bereits ein alternativer Übertragungskanal 7 zur Verfügung steht, der daraufhin nur noch in den Ressourcenparametern angepasst werden muss oder durch einen Kanal 4,5 ersetzt werden muss. Für die Übergangszeit, die zur Suche und Bereitstellung eines geeigneten Kanals 4, 5 oder Anpassung der Ressourcenparameter nötig ist, können die Daten im Kanal 7 übertragen werden, um so den Echtzeitanforderungen gerecht zu werden.

Der Kanal 7 kann so ausgelegt sein, dass er für kurze Zeit umfangreiche Mengen von Paketen übertragen kann, so dass er als Reservekanal für unvorhergesehenen Kapazitätsbedarf bei Störung eines verwendeten Kanals 3, 4, 5 eingesetzt werden kann. Signalisierung ist als Streaming eines einzelnen Pakets zu verstehen.

### Offline Streaming

Beispielsweise bei einem Download einer gespeicherten Sprachnachricht von einem Server (Voicemail Download):
Ein erster Kanal 3 wird von der Umschalteinrichtung 9 des Endgerätes 1 genutzt. Ein weiterer Kanal 7 der ausschließlich nur der Signalisierung dient, beispielsweise für eine elektronische Kurznachricht (SMS), kann dazu verwendet werden, einen Medienwechsel durchzuführen. Diese Funktionsweise spart am meisten Übertragungsressourcen und Batterie da ein weiterer Kanal 4, 5 erst dann aufgebaut wird, wenn der ursprüngliche Kanal 3 möglicherweise nicht mehr verfügbar ist. Diese Methode eignet sich auch, um Daten wie. z.B. E-Mails in Echtzeit zu übertragen, d.h. zu Streamen, die dann gesteuert vom Netzressourcenmanagementsystem in den Zeiten schnell an einem Stück übertragen werden können, sobald z.B. schnellere Übertragungsressourcen (z.B. WLAN Datentankstelle) zur Verfügung stehen. Der Trigger kann dabei von einem externen Ereignis ausgelöst werden.

Sofern keine Echtzeitdaten übertragen werden, befindet sich die Umschalteinrichtung 9 im Leerlauf oder Stromsparmodus. Gestartet wird die Umschalteinrichtung 9 durch eine Datenübertragung von der Datenkopfkomprimierungseinrichtung 8.

Nachfolgend wird ein funktionaler Ablauf der Erfindung am Beispiel einer FTP-Datenübertragung (File Transfer Protocol) in Echtzeit erläutert:

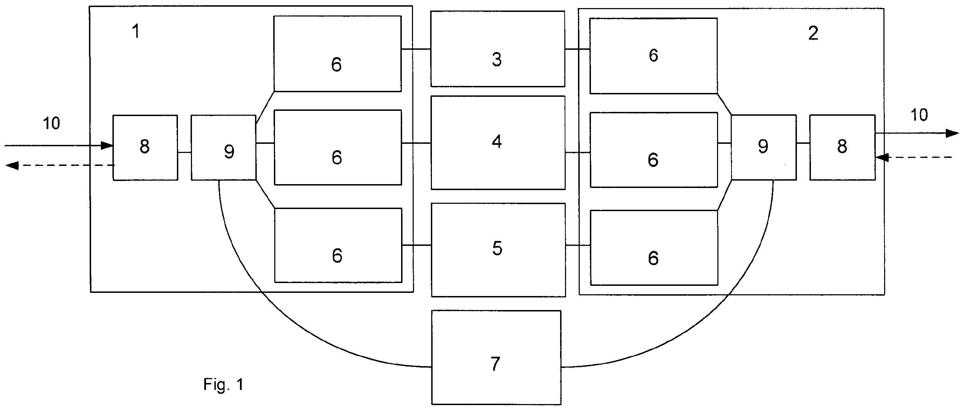

Ein Nutzer verwendet an seinem Endgerät 1 ein Programm zum Übertragen einer Datei von einem FTP-Server, der den Netzknoten 2 darstellt. Das Programm ist damit ein Nutzerdienst, der dem Nutzer eine Datenübertragung mittels FTP ermöglicht. Das Programm öffnet eine Verbindung in einem Kanal 3 zu dem FTP Server, d. h. vom Endgerät 1 zum Netzknoten 2. Diese Verbindung dient der Signalisierung und wird noch nicht dazu verwendet, Nutzdaten in Echtzeit zu übertragen. Die über die Verbindung 3 gesendeten Daten werden über die Umschalteinrichtung 9 des Endgeräts 1 und die Umschalteinrichtung 9 des Netzknotens 2 übertragen (Figur 1), die jeweils zwischen dem Programm bzw. der auf dem Netzknoten 2 hinterlegten Datei und dem Kanal 3 liegen, in dem die Verbindung aufgebaut wird, so dass die Umschalteinrichtungen 9 diesen Daten überwachen können, um mögliche anstehende Echtzeitübertragungen zu erkennen.

Der Benutzer wählt eine Datei file.doc auf dem Server 2 aus, beispielsweise durch den Befehl GET, z.B. GET "file.doc". Der Befehl stellt eine Signalisierungsnachricht dar, die über den Kanal 3 zum Server 2 übertragen wird. Der Server 2 reagiert auf diese Nachricht unter Rücksendung zumindest einer weiteren Signalisierungsnachricht. Die Signalisierungsnachrichten können von den Umschalteinrichtungen 9 ausgewertet werden. Anhand der in ihnen enthaltenen Signalisierungsinformationen erkennen die Umschalteinrichtungen 9 den verwendeten Nutzerdienst, insbesondere das für die Datenübertragung zu verwendende Protokoll ftp. Gleichzeitig erkennen die Umschalteinrichtungen 9 aus dem Signalisierungsverkehr die Dateigröße der auf das Endgerät 1 zu übertragenden Datei "file.doc". Die Dateigröße ist entscheidend für die Beurteilung, wie lange die Datenübertragung dauern wird und wie lang das oder die Überwachungszeitfenster sein sollten.

Daraufhin laden die Umschalteinrichtung 9 des Servers und des Endgeräts 1 einen dem erkannten Nutzerdienst zugeordneten Datensatz, der in einem dem Server 2 zugeordneten Speicher hinterlegt ist. In dem Datensatz sind Übertragungsparameter für den Nutzerdienst sowie Grenzwerte für die Anzahl der Bitfehler, die Anzahl der Paketfehler und die Anzahl der Jitterfehler definiert, die in wenigstens einem ebenfalls in dem Datensatz definierten Überwachungszeitfenster maximal auftreten dürfen. Vorzugsweise sind zwei oder drei Überwachungszeitfenster pro Fehlertyp hinterlegt, in denen die Fehleranzahl der Größen Bitfehler, Paketfehler und Jitterfehler einen festgelegten Grenzwert nicht überschreiten dürfen. Beispielsweise kann das Überwachungszeitfenster für Bitfehler bei einer zu übertragenden Dateigröße von 8 Megabyte 12,5 Millisekunden betragen, wobei als Grenzwert maximal ein Bitfehler in diesem Zeitfenster auftreten darf.

Als Übertragungsparameter für den Nutzerdienst ist in dem Datensatz zumindest die Bruttodatenübertragungsrate pro Zeiteinheit hinterlegt, die beispielsweise 8MBit/s, beträgt. Weitere Übertragungsparameter können ebenfalls in dem Datensatz enthalten sein. Anhand der oder den Übertragungsparametern berechnet die Umschalteinrichtung 9 aus der Dateigröße die zeitliche Dauer der Übertragung, um die Datei von dem Server 2 auf das Endgerät 1 in Echtzeit, d.h. in einem kontinuierlichen Datenstrom mit einer festen Anzahl Bits pro Zeiteinheit zu übertragen.

Die Kanalaufbaueinrichtungen 6 des Servers 2 teilen der Umschalteinrichtung 9 des Servers 2 mit, welche Übertragungsmedien zur Verfügung stehen , d.h. die Übertragungsart, und wie viel Kapazität in den von ihnen aufbaubaren oder aufgebauten Kanälen jeweils noch zur Verfügung steht. Im Falle einer Funkübertragung kann die Kapazität durch eine Funkfeldsignalstärkenschätzung bestimmt werden.

Erfindungsgemäß wird derjenige Kanal 3 zur Datenübertragung verwendet, der die höchste Datenübertragungsrate (Bandbreite) bereitstellt und für den Nutzerdienst ausreichende Kapazität besitzt. Dies wird von der Umschalteinrichtung 9 des Servers 9 aufgrund der von den Kanalaufbau- und -überwachungseinrichtungen 6 des Servers 2 gelieferten Daten entschieden. Sofern der für die Datenübertragung gewählte Kanal 3 eine geringere Datenübertragungsrate besitzt als dem Nutzerdienst zugeordnet ist, wird die Zeitdauer für die Übertragung entsprechend angepasst.

Die Kanalaufbau- und -überwachungseinrichtungen 6 des ausgewählten Kanals 3 wird von der Umschalteinrichtung 9 angewiesen, den Kanal 3 aufzubauen und signalisiert den Aufbau der Kanalaufbau- und -überwachungseinrichtungen 6 des Endgeräts 1. Zwischen den beiden Kanalaufbau- und -überwachungseinrichtungen 6 des Endgeräts 1 und des Servers 2 erfolgt anschließen der Aufbau des Kanals 1 und die Datenübertragung in Echtzeit beginnt.

Die Datenübertragung erfolgt sowohl seitens des Servers 2 als auch seitens des Endgeräts 1 über die Fehlererkennungseinrichtung 8, die zwischen der jeweiligen Umschalteinrichtung 9 und dem Dateninput 10 bzw. Datenoutput 10 angeordnet ist. Der Dateninput 10 steht in Figur 1 schematisch für eine Schnittstelle zum Speicherort der zu übertragenden Datei "file.doc". Der Datenoutput 10 entspricht einer Schnittstelle zu dem Programm, das die Datei dem Nutzer, beispielsweise durch grafische und/ oder akustische Wiedergabe, verfügbar macht.

Die Fehlererkennungseinrichtung 8 des Endgeräts 1 ermittelt kontinuierlich die Bitfehler, Paketfehler, Jitterfehler und vorzugsweise Sequenzfehler in den empfangenen Daten und teilt die Fehler der Umschalteeinrichtung 8 im Endgerät 1 mit. Dies ist allein deshalb möglich, weil die Übertragung in Echtzeit erfolgt, d.h. der Datenstrom kontinuierlich ist mit einer festen Anzahl Bits pro Zeiteinheit.

Die Umschalteinrichtung 9 prüft nunmehr, ob die Anzahl der Bitfehler, Paketfehler, Jitterfehler in dem oder den Überwachungszeitfenstern die in dem Datensatz definierten Grenzwerte überschreitet. Hierzu kann die Umschalteinrichtung 9 vertrauen, dass für die Dauer der Übertragung stets dieselbe Anzahl Bits pro Zeiteinheit empfangen werden. Es werden die Anzahl der Bitfehler, Paketfehler und Jitterfehler pro Überwachungszeitfenster gezählt und mit den Grenzwerten verglichen. Vorzugsweise wird auch geprüft, ob ein Sequenzfehler pro Übrwachungszeitfenster vorliegt.

Sobald die Fehleranzahl einen oder mehrere Grenzwerte überschreitet, sendet die Umschalteinrichtung 9 des Endgeräts 1 ein Signal über alle verfügbaren Kanäle 3, 4, 5 and die Umschalteinrichtung 9 des Servers 2, der dann umgehend die FTP Übertragung über den vorhandenen Signalisierungskanal 7 weiterführt. Die Umschalteinrichtung 9 im Endgerät 1 leitet anschließend die auf dem Signalisierungskanal 7 ankommenden Daten prompt an die Fehlererkennungseinrichtung 9 im Endgerät 1 weiter. Gleichzeitig prüft und entscheidet die Umschalteinrichtung 9 im Server 2 auf der Grundlage der von den Kanalaufbau- und -überwachungseinrichtungen 6 gelieferten Informationen über die verfügbaren Kanäle 4, 5 und deren Übertragungseigenschaften wie Datenübertragungsraten, welcher Kanal 4, 5, alternativ zum ersten Kanal 3 verwendet werden kann und soll. Die Umschalteinrichtung 9 teilt daraufhin der entsprechenden Kanalaufbau- und - überwachungseinrichtung 6 des zweiten Kanals 4 mit, den zweiten Kanal 4 aufzubauen. Diese Kanalaufbau- und -überwachungseinrichtung 6 signalisiert der Kanalaufbau- und -überwachungseinrichtung 6 des Endgeräts 1 den Aufbau des zweiten Kanals 4, und der zweite Kanal 4 wird aufgebaut. Sobald der zweite Kanal 4 aufgebaut ist, schaltet die Umschalteinrichtung 9 des Servers 2 auf den zweiten Kanal 4 und die FTP Übertragung wird in dem zweiten Kanal 4 fortgeführt und somit nicht mehr im Signalisierungskanal 7. Sobald die Daten im Endgerät 1 ankommen, schaltet auch die Umschalteinrichtung 6 des Endgeräts auf den zweiten Kanal 4 und leitet die Daten der Fehlererkennungseinrichtung 8 zu. Sobald die FTP Übertragung beendet ist, wird nicht in den ersten Kanal 3 gewechselt. Vielmehr wird der zweite Kanal 4 für zukünftige Echtzeitübertragungen der erste Kanal 3.

## Patentansprüche

1. Verfahren zur Übertragung von Datenpaketen zwischen einem Endgerät (1) und einem Netzknoten (2) eines konvergenten Kommunikationsnetzes über einen ersten Kanal (3) für einen Nutzerdienst, wobei auf einen zweiten Kanal (4, 5, 7) gewechselt wird, wenn die Übertragungsqualität der Übertragung sinkt, und zur Bewertung der Übertragungsqualität die übertragenen Daten von einer Fehlererkennungseinrichtung (8) auf Fehler geprüft werden und eine Umschalteinrichtung (9) in dem Endgerät (1) und/ oder in dem Netzknoten (2) überprüft, ob die Anzahl an Fehlern zumindest innerhalb eines Überwachungszeitfensters mindestens einen vordefinierten Grenzwert überschreitet, **dadurch gekennzeichnet, dass** die Übertragung in einem kontinuierlichen Datenstrom erfolgt, bei dem stets eine vorbestimmte Anzahl an Datenpaketen pro Zeiteinheit vorliegt, und dass der zweite Kanal (4, 5) im Wesentlichen gleichzeitig mit dem ersten Kanal (3) zwischen dem Endgerät (1) und dem Netzknoten (2) aufgebaut und parallel zum ersten Kanal (3) aufrechterhalten wird oder ein zwischen dem Endgerät (1) und dem Netzknoten (2) vorhandener Signalisierungskanal (7) temporär wenigstens auf die Datenübertragungsrate des ersten Kanals (3) ausgebaut und als zweiter Kanal (7) verwendet wird, wobei die Umschalteinrichtung(en) (9) unter Beibehaltung der Übertragung der vorbestimmten Anzahl an Datenpaketen pro Zeiteinheit auf den zweiten Kanal (4, 5, 7) wechselt/ wechseln, wenn der mindestens eine Grenzwert überschritten wird.

2. Verfahren nach Anspruch 1, **dadurch gekennzeichnet, dass** der erste Kanal (3) in einem ersten Übertragungsmedium und der zweite Kanal (4, 5, 7) in einem zweiten Übertragungsmedium liegt.

3. Verfahren nach Anspruch 1 oder 2, **dadurch gekennzeichnet, dass** die Fehlererkennungseinrichtung (8) die übertragenen Daten kontinuierlich auf Bitfehler, Paketfehler, Jitterfehler und/ oder Fehler in der Paketsequenz prüft und der ihr zugeordneten Umschalteinrichtung (9) das Auftreten dieser Fehler mitteilt.

4. Verfahren nach einem der vorherigen Ansprüche, **dadurch gekennzeichnet, dass** innerhalb von zwei oder drei oder mehr Überwachungszeitfenstern unterschiedlicher zeitlicher Länge gleichzeitig geprüft wird, ob die Anzahl der Fehler vorgegebene Grenzwerte überschreiten, wobei der Wechsel auf den zweiten Kanal (4, 5, 7) nur dann erfolgt, wenn zwei oder mehr Grenzwerte in den Überwachungszeitfenstern gleichzeitig überschritten werden.

5. Verfahren nach einem der vorherigen Ansprüche, **dadurch gekennzeichnet, dass** für verschiedene Fehlertypen unterschiedliche Überwachungszeitfenster verwendet werden.

6. Verfahren nach einem der vorherigen Ansprüche, **dadurch gekennzeichnet, dass** die Länge des oder der Überwachungszeitfenster(s) in einem dem Nutzerdienst zugeordneten Datensatz hinterlegt oder aus diesem Datensatz berechenbar sind, den die Umschalteinrichtung (9) in dem Endgerät (1) und/ oder in dem Netzknoten (2) vor Beginn der Datenübertragung lädt und zur Bestimmung der Länge des oder der Überwachungszeitfenster(s) verwendet.

7. Verfahren nach einem der vorherigen Ansprüche, **dadurch gekennzeichnet, dass** die Länge des oder der Überwachungszeitfenster in Abhängigkeit der zu übertragenden Datenmenge gewählt wird.

8. Verfahren nach einem der vorherigen Ansprüche, **dadurch gekennzeichnet, dass** der oder die Grenzwerte in einem dem Nutzerdienst zugeordneten Datensatz hinterlegt oder aus diesem Datensatz berechenbar sind, den die Umschalteinrichtung (9) in dem Endgerät (1) und/ oder in dem Netzknoten (2) vor Beginn der Datenübertragung lädt und zur Bestimmung des oder der Grenzwerte verwendet.

9. Verfahren nach einem der vorherigen Ansprüche, **dadurch gekennzeichnet, dass** die Umschalteinrichtung (9) in dem Endgerät (1) und/ oder in dem Netzknoten (2) ein Auslösesignal an eine Umschalteinrichtung (9) in der jeweils anderen Seite (1 , 2) sendet, wenn der mindestens eine Grenzwert überschritten wird, woraufhin die Umschalteinrichtung (9) in der anderen Seite (1 , 2) auf den zweiten Kanal (4, 5, 7) wechselt.

10. Verfahren nach Anspruch 9, **dadurch gekennzeichnet, dass** das Auslösesignal über den Signalisierungskanal (7) gesendet wird.

11. Verfahren nach Anspruch 9, **dadurch gekennzeichnet, dass** das Endgerät (1) und der Netzknoten (2) über mehrere Kanäle (3, 4, 5) miteinander verbunden sind und das Auslösesignal über mehr als einen dieser Kanäle (3, 4, 5), insbesondere über alle Kanäle (3, 4, 5) gesendet wird.

12. Verfahren nach einem der vorherigen Ansprüche, **dadurch gekennzeichnet, dass** ein weiterer Kanal (4, 5) zwischen dem Endgerät (1) und dem Netzknoten (2) aufgebaut wird und die Datenübertragung anschliessend von dem Signalisierungskanal (7) zu dem weiteren Kanal (4, 5) gewechselt wird.

13. Verfahren nach Anspruch 12, **dadurch gekennzeichnet, dass** die Datenübertragung innerhalb von wenigen Millisekunden oder wenigen Mikrosekunden von dem Signalisierungskanal (7) in den weiteren Kanal (4, 5) gelegt wird.

14. Verfahren nach einem der Ansprüche 9 bis 13, **dadurch gekennzeichnet, dass** das Auslösesignal eine elektronische Kurznachricht (SMS) ist.

15. Verfahren nach einem der vorherigen Ansprüche, **dadurch gekennzeichnet, dass** das Endgerät (1) und der Netzknoten (2) über zwei oder mehr Kanäle (4, 5) miteinander verbunden sind und die Datenübertragungsrate jedes Kanals (3, 4, 5) von der Umschalteinrichtung (9) in dem Endgerät (1) und/ oder in dem Netzknoten (2) überwacht wird und als zweiter Kanal (4, 5) derjenige Kanal (4, 5) verwendet wird, der aktuell die höchste Datenübertragungsrate aufweist.

16. Verfahren nach Anspruch 15, **dadurch gekennzeichnet, dass** der Wechsel auf den zweiten Kanal (4, 5) dann erfolgt, wenn die aktuelle Datenübertragungsrate des zweiten Kanals (4, 5) grösser als die Datenübertragungsrate des ersten Kanals (3) ist und der zweite Kanal (4, 5) nicht innerhalb eines letzten Zeitraums von wenigen Sekunden verwendet worden ist.

17. Verfahren nach einem der vorherigen Ansprüche, **dadurch gekennzeichnet, dass** die Datenübertragung durch einen Tunnel erfolgt, wenn keine direkte Verbindung zwischen dem Endgerät (1) und dem Netzknoten (2) besteht.

18. Verfahren nach einem der vorherigen Ansprüche, **dadurch gekennzeichnet, dass** Kanalaufbau- und -Überwachungseinheiten (6) in dem Endgerät und/ oder in dem Netzknoten (2) der jeweiligen Umschalteinrichtung (9) in dem Endgerät (1) und/ oder in dem Netzknoten (2) die Art und/ oder den Übertragungsstandard der verfügbaren Kanäle (3, 4, 5), insbesondere samt ihren jeweils aktuell verfügbaren Datenübertragungsraten mitteilen.

19. Verfahren nach einem der vorherigen Ansprüche 5 bis 20, **dadurch gekennzeichnet, dass** nur die Umschalteinrichtung (9) in dem Netzknoten (2) die Länge des oder der Überwachungszeitfenster und den oder die Grenzwerte ermittelt und dem Endgerät (1) mitteilt.

20. Verfahren nach einem der vorherigen Ansprüche, **dadurch gekennzeichnet, dass** die Grenzwerte strenger sind als es die Anforderungen für den Nutzerdienst fordern.

21. System zur Übertragung von Datenpaketen zwischen einem Endgerät (1) und einem Netzknoten (2) eines konvergenten Kommunikationsnetzes über einen ersten Kanal (3) für einen Nutzerdienst, umfassend ein Endgerät (1), einen Netzknoten (2) eines konvergenten Kommunikationsnetzes sowie einen ersten Kanal (3), über den das Endgerät (1) mit dem Netzknoten (2) zur Übertragung von Datenpaketen in einem kontinuierlichen Datenstrom, bei dem stets eine vorbestimmte Anzahl an Datenpaketen pro Zeiteinheit vorliegt, verbunden ist, weiterhin umfassend zumindest einen zweiten Kanal (4, 5, 7), zu dem die Datenübertragung gewechselt werden kann, wenn die Übertragungsqualität sinkt, eine Fehlererkennungseinrichtung (8) zur Prüfung der Datenübertragung auf Fehler, und eine Umschalteinrichtung (9) in dem Endgerät (1) und in dem Netzknoten (2) zur Überprüfung, ob die Anzahl an Fehlern zumindest innerhalb eines Überwachungszeitfensters mindestens einen vordefinierten Grenzwert überschreitet, **dadurch gekennzeichnet, dass** das System dazu eingerichtet ist, den zweiten Kanal (4, 5) im Wesentlichen gleichzeitig mit dem ersten Kanal (3) zwischen dem Endgerät (1) und dem Netzknoten (2) aufzubauen und parallel zum ersten Kanal (3) aufrechtzuerhalten oder einen zwischen dem Endgerät (1) und dem Netzknoten (2) vorhandenen Signalisierungskanal (7) temporär wenigstens auf die Datenübertragungsrate des ersten Kanals (3) auszubauen und als zweiten Kanal (7) zu verwenden, wobei die Umschalteinrichtung(en) (9) dazu eingerichtet ist/sind, unter Beibehaltung der Übertragung der vorbestimmten Anzahl an Datenpaketen pro Zeiteinheit auf den zweiten Kanal (4, 5, 7) zu wechseln, wenn der mindestens eine Grenzwert überschritten ist.

22. System nach Anspruch 21, **dadurch gekennzeichnet, dass** die Fehlererkennungseinrichtung (8) eine Datenkopfkomprimierungseinrichtung ist, die zwischen einer Umschalteinrichtung (9) und einer Datenschnittstelle (10) angeordnet ist.

23. System nach Anspruch 21 oder 22, **dadurch gekennzeichnet, dass** jedem der Kanäle (3, 4, 5) in dem Endgerät (1) und dem Netzknoten (2) eine Kanalaufbau und -Überwachungseinheit (6) zugeordnet ist, wobei den Kanalaufbau und -Überwachungseinheiten (6) derselben Seite (1 , 2) in Datenübertragungsrichtung zu dem Kanal (3, 4, 5) die entsprechende Umschalteinrichtung (9) vorgeschaltet ist.

24. System nach Anspruch 21, 22 oder 23, **dadurch gekennzeichnet, dass** die Umschalteinrichtungen in dem Endgerät (1) und in dem Netzknoten (2) über den Signalisierungskanal (7) miteinander verbunden sind.

25. System nach Anspruch 21, 22, 23 oder 24, **dadurch gekennzeichnet, dass** das System das Verfahren nach einem der Ansprüche 1 bis 20 durchführt.

## Claims

1. Method for transmitting data packets between a terminal (1) and a network node (2) of a convergent communication network via a first channel (3) for a user service, a change to a second channel (4, 5, 7) being made if the transmission quality of the transmission falls, and an error detection device (8) checking the transmitted data for errors in order to assess the transmission quality, and a changeover device (9) in the terminal (1) and/or in the network node (2) checking whether the number of errors at least within a monitoring time window exceeds at least one predefined limit value, **characterized in that** the transmission is carried out in a continuous data stream which always contains a predetermined number of data packets per unit time, and **in that** the second channel (4, 5) is set up between the terminal (1) and the network node (2) substantially at the same time as the first channel (3) and is maintained in parallel with the first channel (3), or a signalling channel (7) between the terminal (1) and the network node (2) is temporarily upgraded at least to the data transmission rate of the first channel (3) and is used as the second channel (7), the changeover device(s) (9) changing to the second channel (4, 5, 7), while maintaining the transmission of the predetermined number of data packets per unit time, if the at least one limit value is exceeded.

2. Method according to Claim 1, **characterized in that** the first channel (3) is in a first transmission medium and the second channel (4, 5, 7) is in a second transmission medium.

3. Method according to Claim 1 or 2, **characterized in that** the error detection device (8) continuously checks the transmitted data for bit errors, packet errors, jitter errors and/or errors in the packet sequence and informs the changeover device (9) assigned to it of the occurrence of these errors.

4. Method according to one of the preceding claims, **characterized in that**, within two or three or more monitoring time windows of different temporal length, it is simultaneously checked whether the number of errors exceeds predefined limit values, the change to the second channel (4, 5, 7) being made only when two or more limit values are simultaneously exceeded in the monitoring time windows.

5. Method according to one of the preceding claims, **characterized in that** different monitoring time windows are used for different error types.

6. Method according to one of the preceding claims, **characterized in that** the length of the monitoring time window(s) is stored in a data record assigned to the user service or can be calculated from this data record which is loaded by the changeover device (9) in the terminal (1) and/or in the network node (2) before the start of data transmission and is used to determine the length of the monitoring time window(s).

7. Method according to one of the preceding claims, **characterized in that** the length of the monitoring time window (s) is selected on the basis of the volume of data to be transmitted.

8. Method according to one of the preceding claims, **characterized in that** the limit value(s) is/are stored in a data record assigned to the user service or can be calculated from this data record which is loaded by the changeover device (9) in the terminal (1) and/or in the network node (2) before the start of data transmission and is used to determine the limit value(s).

9. Method according to one of the preceding claims, **characterized in that** the changeover device (9) in the terminal (1) and/or in the network node (2) transmits a trigger signal to a changeover device (9) at the respective other end (1, 2) if the at least one limit value is exceeded, whereupon the changeover device (9) at the other end (1, 2) changes to the second channel (4, 5, 7).

10. Method according to Claim 9, **characterized in that** the trigger signal is transmitted via the signalling channel (7).

11. Method according to Claim 9, **characterized in that** the terminal (1) and the network node (2) are connected to one another via a plurality of channels (3, 4, 5) and the trigger signal is transmitted via more than one of these channels (3, 4, 5), in particular via all channels (3, 4, 5).

12. Method according to one of the preceding claims, **characterized in that** a further channel (4, 5) is set up between the terminal (1) and the network node (2) and the data transmission is then changed from the signalling channel (7) to the further channel (4, 5).

13. Method according to Claim 12, **characterized in that** the data transmission is moved from the signalling channel (7) to the further channel (4, 5) within a few milliseconds or a few microseconds.

14. Method according to one of Claims 9 to 13, **characterized in that** the trigger signal is an electronic short message (SMS).

15. Method according to one of the preceding claims, **characterized in that** the terminal (1) and the network node (2) are connected to one another via two or more channels (4, 5) and the data transmission rate of each channel (3, 4, 5) is monitored by the changeover device (9) in the terminal (1) and/or in the network node (2), and that channel (4, 5) which currently has the highest data transmission rate is used as the second channel (4, 5).

16. Method according to Claim 15, **characterized in that** the change to the second channel (4, 5) is made when the current data transmission rate of the second channel (4, 5) is greater than the data transmission rate of the first channel (3) and the second channel (4, 5) has not been used within a last period of a few seconds.

17. Method according to one of the preceding claims, **characterized in that** the data are transmitted by means of a tunnel if there is no direct connection between the terminal (1) and the network node (2).

18. Method according to one of the preceding claims, **characterized in that** channel set-up and monitoring units (6) in the terminal and/or in the network node (2) inform the respective changeover device (9) in the terminal (1) and/or in the network node (2) of the type and/or transmission standard of the available channels (3, 4, 5), in particular together with their respective currently available data transmission rates.

19. Method according to one of the preceding Claims 5 to 20, **characterized in that** only the changeover device (9) in the network node (2) determines the length of the monitoring time window (s) and the limit value(s) and informs the terminal (1) of them.

20. Method according to one of the preceding claims, **characterized in that** the limit values are stricter than required by the requirements for the user service.

21. System for transmitting data packets between a terminal (1) and a network node (2) of a convergent communication network via a first channel (3) for a user service, comprising a terminal (1), a network node (2) of a convergent communication network and a first channel (3), via which the terminal (1) is connected to the network node (2) for the purpose of transmitting data packets in a continuous data stream which always contains a predetermined number of data packets per unit time, also comprising at least one second channel (4, 5, 7), to which the data transmission can be changed if the transmission quality falls, an error detection device (8) for checking the data transmission for errors, and a changeover device (9) in the terminal (1) and in the network node (2) for checking whether the number of errors at least within a monitoring time window exceeds at least one predefined limit value, **characterized in that** the system is set up to set up the second channel (4, 5) between the terminal (1) and the network node (2) substantially at the same time as the first channel (3) and to maintain the second channel in parallel with the first channel (3) or to temporarily upgrade a signalling channel (7) between the terminal (1) and the network node (2) at least to the data transmission rate of the first channel (3) and to use it as the second channel (7), the changeover device(s) (9) being set up to change to the second channel (4, 5, 7), while maintaining the transmission of the predetermined number of data packets per unit time, if the at least one limit value is exceeded.

22. System according to Claim 21, **characterized in that** the error detection device (8) is a data header compression device which is arranged between a changeover device (9) and a data interface (10).

23. System according to Claim 21 or 22, **characterized in that** a channel set-up and monitoring unit (6) is assigned to each of the channels (3, 4, 5) in the terminal (1) and in the network node (2), the corresponding changeover device (9) being connected upstream of the channel set-up and monitoring units (6) at the same end (1, 2) in the data transmission direction to the channel (3, 4, 5).

24. System according to Claim 21, 22 or 23, **characterized in that** the changeover devices in the terminal (1) and in the network node (2) are connected to one another via the signalling channel (7).

25. System according to Claim 21, 22, 23 or 24, **characterized in that** the system carries out the method according to one of Claims 1 to 20.

## Revendications

1. Procédé de transmission de paquets de données entre un terminal (1) et un noeud de réseau (2) d'un réseau de communication convergent par l'intermédiaire d'un premier canal (3) d'un service d'abonné, dans lequel un basculement est effectué sur un second canal (4, 5, 7) si la qualité de la transmission diminue et, pour évaluer la qualité de transmission, les données transmises sont vérifiées en ce qui concerne la présence d'erreurs par un dispositif de détection d'erreurs (8) et un dispositif de commutation (9) se trouvant dans le terminal (1) et/ou dans le noeud de réseau (2) vérifie si le nombre d'erreurs dépasse, au moins au cours d'une fenêtre temporelle de surveillance, au moins une valeur limite prédéfinie, **caractérisé en ce que** la transmission est effectuée dans un flux de données continu dans lequel un nombre prédéterminé de paquets de données par unité de temps est présent en continu, et **en ce que** le second canal (4, 5) est établi pratiquement en même temps que le premier canal (3) entre le terminal (1) et le noeud de réseau (2) et est maintenu en parallèle avec le premier canal (3), ou un canal de signalisation (7) présent entre le terminal (1) et le noeud de réseau (2) est temporairement établi au moins au débit de transmission de données du premier canal (3) et est utilisé en tant que second canal (7), dans lequel le (s) dispositif(s) de commutation (9) bascule/basculent sur le second canal (4, 5, 7) en poursuivant la transmission du nombre prédéterminé de paquets de données par unité de temps si l'au moins une valeur limite est dépassée.

2. Procédé selon la revendication 1, **caractérisé en ce que** le premier canal (3) se situe sur un premier support de transmission et le second canal (4, 5, 7) se situe sur un second support de transmission.

3. Procédé selon la revendication 1 ou 2, **caractérisé en ce que** le dispositif de détection d'erreurs (8) vérifie en continu les données transmises en ce qui concerne les erreurs sur les bits, les erreurs sur les paquets, les erreurs de gigue et/ou les erreurs affectant la séquence des paquets et signale l'apparition desdites erreurs au dispositif de commutation (9) qui lui est associé.

4. Procédé selon l'une quelconque des revendications précédentes, **caractérisé en ce qu'**il est vérifié simultanément au cours de deux ou trois fenêtres temporelles de surveillance ayant des longueurs temporelles différentes ou plus, si le nombre des erreurs dépasse une valeur limite prédéterminée, dans lequel le basculement sur le second canal (4, 5, 7) n'est effectué que si deux valeurs limites ou plus sont dépassées simultanément dans les fenêtres temporelles de surveillance.

5. Procédé selon l'une quelconque des revendications précédentes, **caractérisé en ce que** des fenêtres temporelles de surveillance différentes pour des types d'erreurs différents sont utilisées.

6. Procédé selon l'une quelconque des revendications précédentes, **caractérisé en ce que** la longueur de la ou des fenêtre(s) temporelle(s) de surveillance est stockée dans un jeu de données associé au service utilisateur ou peut être calculée à partir dudit jeu de données, que le dispositif de commutation (9) charge dans le terminal (1) et/ou dans le noeud de réseau (2) avant le début de la transmission de données et qu'il utilise pour déterminer la longueur de la ou des fenêtre(s) temporelle(s) de surveillance.

7. Procédé selon l'une quelconque des revendications précédentes, **caractérisé en ce que** la longueur de la ou des fenêtres temporelles de surveillance est sélectionnée en fonction de la quantité de données à transmettre.

8. Procédé selon l'une quelconque des revendications précédentes, **caractérisé en ce que** la ou les valeur(s) limite(s) est/sont stockée(s) dans un jeu de données associé au service utilisateur ou peuvent être calculées à partir dudit jeu de données, que le dispositif de commutation (9) charge dans le terminal (1) et/ou dans le noeud de réseau (2) avant le début de la transmission de données et qu'il utilise pour déterminer la ou les valeur(s) limite(s).

9. Procédé selon l'une quelconque des revendications précédentes, **caractérisé en ce que** le dispositif de commutation (9) du terminal (1) et/ou du noeud de réseau (2) envoie un signal de déclenchement à un dispositif de commutation (9) se situant respectivement de l'autre côté (1, 2) si l'au moins une valeur limite est dépassée, lors de quoi le dispositif de commutation (9) se situant de l'autre côté (1, 2) bascule sur le second canal (4, 5, 7).

10. Procédé selon la revendication 9, **caractérisé en ce que** le signal de déclenchement est émis par l'intermédiaire du canal de signalisation (7).

11. Procédé selon la revendication 9, **caractérisé en ce que** le terminal (1) et le noeud de réseau (2) sont reliés l'un à l'autre par l'intermédiaire de plusieurs canaux (3, 4, 5) et **en ce que** le signal de déclenchement est émis par l'intermédiaire de plus de l'un desdits canaux (3, 4, 5), notamment par l'intermédiaire de tous les canaux (3, 4, 5).

12. Procédé selon l'une quelconque des revendications précédentes, **caractérisé en ce qu'**un autre canal (4, 5) est établi entre le terminal (1) et le noeud de réseau (2) et **en ce que** la transmission de données est ensuite amenée à basculer du canal de signalisation (7) à l'autre canal (4, 5).

13. Procédé selon la revendication 12, **caractérisé en ce que** la transmission de données se situe dans l'autre canal (4, 5)à moins de quelques millisecondes ou à moins de quelques microsecondes du canal de signalisation (7).

14. Procédé selon l'une quelconque des revendications 9 à 13, **caractérisé en ce que** le signal de déclenchement est un message court électronique (SMS).

15. Procédé selon l'une quelconque des revendications précédentes, **caractérisé en ce que** le terminal (1) et le noeud de réseau (2) sont reliés l'un à l'autre par l'intermédiaire de deux canaux (4, 5) ou plus et **en ce que** le débit de transmission de données de chaque canal (3, 4, 5) est surveillé par le dispositif de commutation (9) se trouvant dans le terminal (1) et/ou dans le noeud de réseau (2) et **en ce que** le canal (4, 5) qui présente le débit de transmission de données instantané le plus élevé est utilisé en tant que second canal (4, 5).

16. Procédé selon la revendication 15, **caractérisé en ce que** le basculement sur le second canal (4, 5) ne s'effectue que si le débit de transmission de données actuel du second canal (4, 5) est supérieur au débit de transmission de données du premier canal (3) et si le second canal (4, 5) n'a pas été utilisé au cours d'un dernier intervalle de temps de quelques secondes.

17. Procédé selon l'une quelconque des revendications précédentes, **caractérisé en ce que** la transmission de données s'effectue par l'intermédiaire d'un tunnel lorsqu'aucune liaison directe n'existe entre le terminal (1) et le noeud de réseau (2).

18. Procédé selon l'une quelconque des revendications précédentes, **caractérisé en ce que** des unités d'établissement et de surveillance de canal (6) se trouvant dans le terminal et/ou dans le noeud de réseau (2) transmettent au dispositif de commutation (9) respectif se trouvant dans le terminal (1) et/ou dans le noeud de réseau (2) le type et/ou la norme de transmission des canaux disponibles (3, 4, 5), notamment en association avec leurs débits de données actuels respectivement disponibles.

19. Procédé selon l'une quelconque des revendications 5 à 20 précédentes, **caractérisé en ce que** seul le dispositif de commutation (9) du noeud de réseau (2) communique la longueur de la ou des fenêtre(s) temporelle(s) de surveillance et la ou les valeur(s) limite(s) et les communique au terminal (1).

20. Procédé selon l'une quelconque des revendications précédentes, **caractérisé en ce que** les valeurs limites sont plus contraignantes que l'exigent les exigences du service utilisateur.

21. Système de transmission de paquets de données entre un terminal (1) et un noeud de réseau (2) d'un réseau de communication convergent par l'intermédiaire d'un premier canal (3) destiné à un service d'abonné, comprenant un terminal (1), un noeud de réseau (2) d'un réseau de communication convergent ainsi qu'un premier canal (3) par l'intermédiaire duquel le terminal (1) est relié au noeud de réseau (2) pour transmettre des paquets de données dans un flux de données continu dans lequel un nombre prédéterminé de paquets de données par unité de temps est présent en continu, comprenant en outre au moins un second canal (4, 5, 7) sur lequel la transmission de données peut basculer si la qualité de transmission diminue, un dispositif de détection d'erreurs (8) destiné à vérifier la transmission de données en ce qui concerne les erreurs, et un dispositif de commutation (9) se trouvant dans le terminal (1) et dans le noeud de réseau (2) pour vérifier si le nombre d'erreurs dépasse au moins une valeur limite prédéfinie au moins au cours d'une fenêtre temporelle de surveillance, **caractérisé en ce que** le système est en outre conçu pour établir le second canal (4, 5) pratiquement en même temps que le premier canal (3) entre le terminal (1) et le noeud de réseau (2) et pour le maintenir en parallèle au premier canal (3) ou pour établir temporairement un canal de signalisation (7) présent entre le terminal (1) et le noeud de réseau (2) au moins au débit de transmission de données du premier canal (3) et pour l'utiliser en tant que second canal (7), dans lequel le(s) dispositif(s) de commutation (9) est/sont conçu(s) pour basculer sur le second canal (4, 5, 7) en poursuivant la transmission du nombre prédéterminé de paquets de données par unité de temps si l'au moins une valeur limite est dépassée.

22. Système selon la revendication 21, **caractérisé en ce que** le dispositif de détection d'erreurs (8) est un dispositif de compression d'entête de données qui est disposé entre un dispositif de commutation (9) et une interface de données (10).

23. Système selon la revendication 21 ou 22, **caractérisé en ce qu'**une unité d'établissement et de surveillance de canal (6) est associée à chacun des canaux (3, 4, 5) dans le terminal (1) et le noeud de réseau (2), dans lequel le dispositif de commutation (9) correspondant est connecté en amont des unités d'établissement et de surveillance de canal (6) d'un même côté (1, 2) dans la direction de transmission de données par rapport au canal (3, 4, 5).

24. Système selon la revendication 21, 22 ou 23, **caractérisé en ce que** le dispositif de commutation se trouvant dans le terminal (1) et dans le noeud de réseau (2) sont reliés l'un à l'autre par l'intermédiaire du canal de signalisation (7).

25. Système selon la revendication 21, 22, 23 ou 24, **caractérisé en ce que** le système met en oeuvre le procédé selon l'une quelconque des revendications 1 à 20.
